# EUROPÄISCHE PATENTSCHRIFT

(11) **EP 1 656 275 B1**
(45) Veröffentlichungstag und Bekanntmachung des Hinweises auf die Patenterteilung: **12.06.2013**
(21) Anmeldenummer: 04762618.9
(22) Anmeldetag: 06.08.2004
(51) Int. Cl.: B60J 7/20

(54) **CABRIOLET-FAHRZEUG**
CABRIOLET
CABRIOLET

(30) Priorität: 14.08.2003 DE 10337353
(43) Veröffentlichungstag der Anmeldung: 17.05.2006
(73) Patentinhaber: Valmet Automotive Oy, 23500 Uusikaupunki (FI)
(72) Erfinder: BROCKHOFF, Franz, Ulrich, 49565 Bramsche (DE); MEINERT, Stefan, 49134 Wallenhorst (DE)
(74) Vertreter: Kronthaler, Schmidt & Coll.
(86) Internationale Anmeldenummer: PCT/DE2004/001773
(87) Internationale Veröffentlichungsnummer: WO 2005/016679

(56) Entgegenhaltungen:
- EP-A- 1 279 540
- DE-A- 10 051 616
- DE-A- 19 932 501
- DE-A- 19 940 959

## Beschreibung

Die Erfindung betrifft ein Cabriolet-Fahrzeug mit einem unterhalb eines Deckelteils ablegbaren Dach, wobei das Deckelteil wahlweise in zwei unterschiedlichen Bewegungsabläufen verlagerbar ist, nach dem Oberbegriff des Anspruchs 1.

Aus der DE 44 45 944 C1 ist ein Cabriolet-Fahrzeug bekannt, das ein in zwei gegensinnigen Bewegungsabläufen zu öffnendes Deckelteil vorsieht. Dieses ist' an einem heckwärtigen Hilfsrahmen gehalten, der seinerseits zur Verwirklichung eines ersten Bewegungssinns um eine hecknahe Achse schwenkt und zur Verwirklichung eines zweiten Bewegungssinns unverschwenkt verharrt, während dann an dem Hilfsrahmen gehaltene Mehrgelenke öffnen. Eine derartige Konstruktion erfordert einen hohen konstruktiven Aufwand mit einer Vielzahl von Drehpunkten. Zudem schwenkt das Deckelteil bei Freigabe der Durchtrittsöffnung für das Dach um eine seinem rückwärtigen Schloß zugeordnete Achse, was die Gestaltungsmöglichkeiten des Fahrzeughecks einschränkt.

Die DE 100 51 616 A1 zeigt ein Cabriolet-Fahrzeug, das ebenfalls ein in zwei gegensinnigen Bewegungsabläufen zu öffnendes Deckelteil vorsieht. Für die Bewegung des Deckelteils zur Freigabe einer Durchtrittsöffnung für das Dach ist ein erstes Getriebe vorgesehen, das zwei Hebel und eine Gasdruckfeder umfaßt, und für die Bewegung des Deckelteils zur Freigabe einer Beladeöffnung für Gepäck ist ein zweites Getriebe vorgesehen, das eine andere Lenkergruppe und einen zugehörigen Antrieb umfaßt. Damit ist es in jedem Bewegungssinn so, daß eines der beiden Getriebe vollständig inaktiv und in sich unbewegt ist und somit einfacher durch ein starres Bauteil ersetzt werden könnte. Dadurch ergibt sich auch hier ein hoher konstruktiver Aufwand mit einer Vielzahl von Drehpunkten.

Bei der in der DE 199 32 501 C2 beschriebenen Ausführung kann die Heckklappe um eine nahe ihrer Vorderkante angeordnete vordere Schwenkachse und um eine nahe ihrer Hinterkante angeordnete Schwenkachse verschwenkt werden. Zum Verschwenken der Heckklappe sind ein vorderer Viergelenkmechanismus und ein hinterer Viergelenkmechanismus vorgesehen.

Der Erfindung liegt das Problem zugrunde, ein Cabriolet-Fahrzeug der genannten Art hinsichtlich der Öffnungsmechanik seines Deckelteils zu verbessern.

Die Erfindung löst dieses Problem durch ein Cabriolet-Fahrzeug mit den Merkmalen des Anspruchs 1. Vorteilhafte Ausgestaltungen der Erfindung ergeben sich aus den weiteren Ansprüchen 2 bis 10.

Erfindungsgemäß ist erreicht, daß mit demselben Mehrgelenkmechanismus beide gegensinnige Öffnungsbewegungen des Deckelteils bewirkbar sind, wobei jeweils Gelenke für beide Öffnungsbewegungen genutzt werden. Es bedarf somit keiner getrennten Gelenkanordnungen für die Bewegung zur Freigabe der Durchtrittsöffnung für das Dach einerseits und die Bewegung zur Freigabe der Beladeöffnung für Gepäck andererseits. Die Gesamtkonstruktion ist damit erheblich vereinfacht, ebenso sind der Raumbedarf im Fahrzeug und die Anzahl der Drehpunkte minimiert. Die Mehrgelenkmechanismen können raumsparend ohne zusätzliche mechanische Querverbindung den Fahrzeugseiten zugeordnet sein.

Da jeder Mehrgelenkmechanismus nur ein Gelenk mehr vorsieht, als für jeweils einen der beiden Bewegungsabläufe benötigt wird, ist die Anzahl der Drehpunkte so gering wie möglich gehalten, was die Einfachheit und Zuverlässigkeit der Konstruktion weiter verbessert.

Dabei wird auch das heckseitige Schloß nicht als Schwenkachse benötigt, so daß vorteilhaft das Deckelteil in beiden Bewegungsabläufen aus dem Schloß herausgehoben ist und jeweils nur über die Mehrgelenkketten schwenkbeweglich ist; somit resultiert im Bereich des rückwärtigen Schlosses keinerlei Einschränkung für das Heckdesign.

Eine günstige und einfache Bewegungskinematik ergibt sich, wenn für jeden Bewegungssinn des Deckelteils ein Viergelenk aktiv ist, also insgesamt die Gelenkkette somit zumindest fünf Gelenke umfaßt.

Gelenke können dabei von verschiedener Art sein, etwa als Drehgelenke, Schubgelenke oder Kurvengelenke ausgebildet sein.

Um die Steuerung der einzelnen Bewegungsabläufe so einfach wie möglich zu gestalten, kann die Blockierung des oder der für den jeweiligen Bewegungsablauf überzähligen Gelenks oder Gelenke durch einen Schloßhebel mechanisch zwangsgeführt bewirkt werden. Dieser ist zur Reduzierung der Zahl der bewegten Bauteile besonders vorteilhaft durch ein Antriebsorgan bewegbar, das gleichzeitig zur Bewirkung einer Öffnungsbewegung des Deckelteils dient.

Es ist vorteilhaft möglich, neben der normalen Schließstellung für den Moment des Schließens eine zusätzlich im Schließsinn vorgespannte Preßstellung, etwa durch einen Übermaßdruck des Antriebsorgans, zu bewirken, wodurch eine besonders zuverlässige Schließsicherung erreicht wird.

Weitere Vorteile und Merkmale der Erfindung ergeben sich aus einem in der Zeichnung dargestellten und nachfolgend erläuterten Ausführungsbeispiel des Gegenstandes der Erfindung.

In der Zeichnung zeigt:
- Fig. 1: eine seitliche schematische Ansicht eines. Heckbereichs eines erfindungsgemäßen Cabriolet-Fahrzeugs in geschlossener Stellung des Deckelteils,
- Fig. 2: eine ähnliche Ansicht des Deckelteils und der zugehörigen Bewegungsmechanik wie in Fig. 1 während der beginnenden Öffnung des Deckelteils zur Freigabe einer Beladeöffnung für Gepäck,
- Fig. 3: eine ähnliche Ansicht wie Fig. 2 bei weiter fortschreitender Öffnung des Deckelteils,
- Fig. 4: eine ähnliche Ansicht wie Fig. 3 bei vollständig geöffnetem Deckelteil zur Freigabe der Beladeöffnung für Gepäck,
- Fig. 5: eine ähnliche Ansicht des Heckbereichs wie in Fig. 1, jedoch bei beginnender Öffnung des Deckelteils zur Freigabe der Durchtrittsöffnung für das Dach bzw. in der Endphase des Schließens des Deckelteils aus diesem Bewegungssinn mit zusätzlich im Schließsinn wirkendem Übermaßdruck,
- Fig. 6: eine ähnliche Ansicht des Deckelteils und der zugehörigen Bewegungsmechanik wie in Fig. 5 bei weiter fortschreitender Öffnung des Deckelteils zur Freigabe der Durchtrittsöffnung für das Dach,
- Fig. 7: eine ähnliche Ansicht wie Fig. 6 bei vollständig zur Freigabe der Durchtrittsöffnung für das Dach geöffnetem Deckelteil,
- Fig. 8: eine ähnliche Darstellung des Deckelteils und der Bewegungsmechanik wie in Fig. 1, jedoch mit schematisierter Darstellung der wirksamen Lenker und ohne Antriebs- und Schloßhebelteile oder andere nicht unmittelbar an der Deckelteilbewegung beteiligte Fahrzeugteile,
- Fig. 9: eine ähnliche Darstellung wie Fig. 2, jedoch mit schematisierter Darstellung der wirksamen Lenker und ohne Antriebs- und Schloßhebelteile,
- Fig. 10: eine ähnliche Darstellung wie Fig. 3, jedoch mit schematisierter Darstellung der wirksamen Lenker und ohne Antriebs- und Schloßhebelteile,
- Fig. 11: eine ähnliche Darstellung wie Fig. 4, jedoch mit schematisierter Darstellung der wirksamen Lenker und ohne Antriebs- und Schloßhebelteile,
- Fig. 12: eine ähnliche Darstellung wie Fig. 6, jedoch mit schematisierter Darstellung der wirksamen Lenker und ohne Antriebs- und Schloßhebelteile,
- Fig. 13: eine ähnliche Darstellung wie Fig. 7, jedoch mit schematisierter Darstellung der wirksamen Lenker und ohne Antriebs- und Schloßhebelteile.

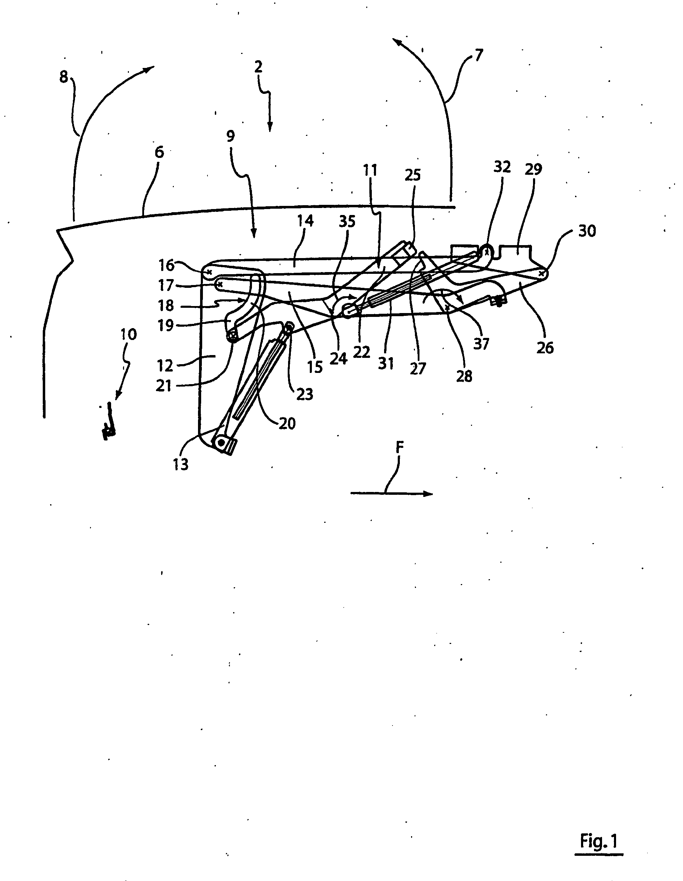

In Fig. 1 ist ein Heckbereich 2 eines insgesamt mit 1 bezeichneten Cabriolet-Fahrzeugs schematisch dargestellt; dieses umfaßt ein bewegliches Dach 3, das teilweise oder wie hier vollständig aus starren Teilen bestehen kann oder auch außerhalb einer Heckscheibe 4 durchgehend mit einer flexiblen Bespannung versehen sein kann. Das Dach 3 ist zu seiner Öffnung in der Karosserie 5 unterhalb eines Deckelteils 6 in einem Verdeckkasten ablegbar.

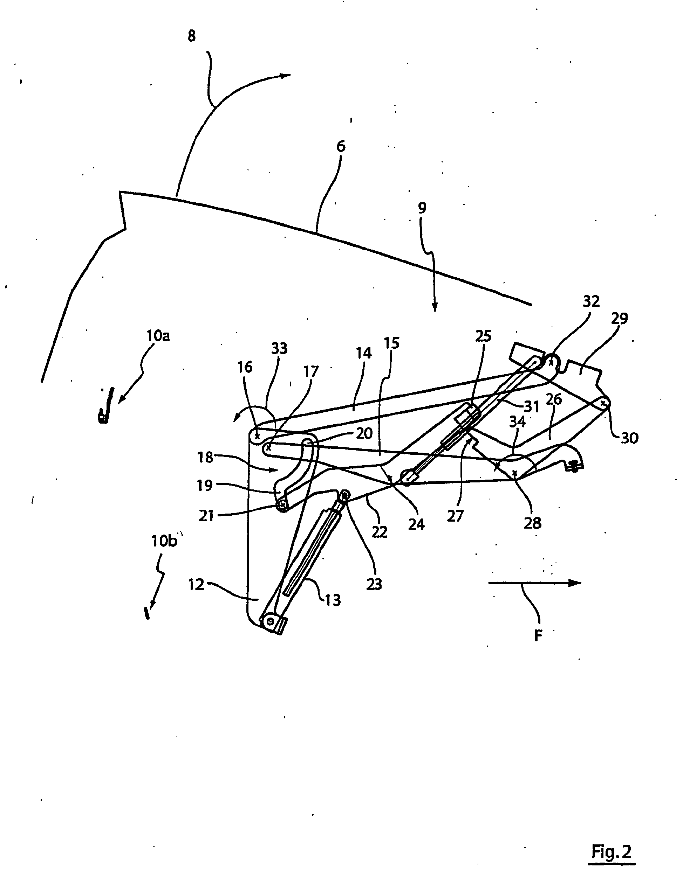

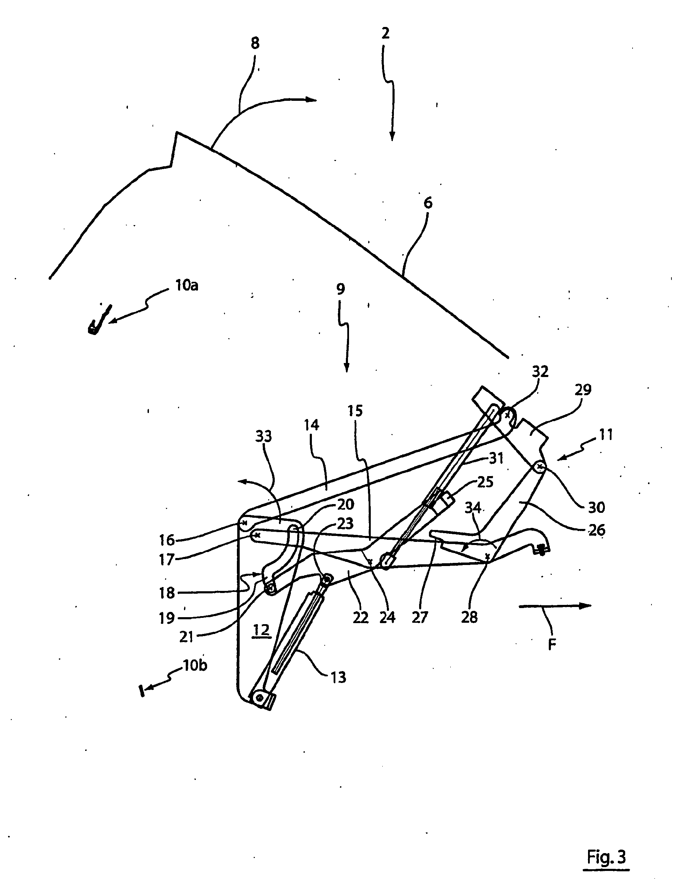

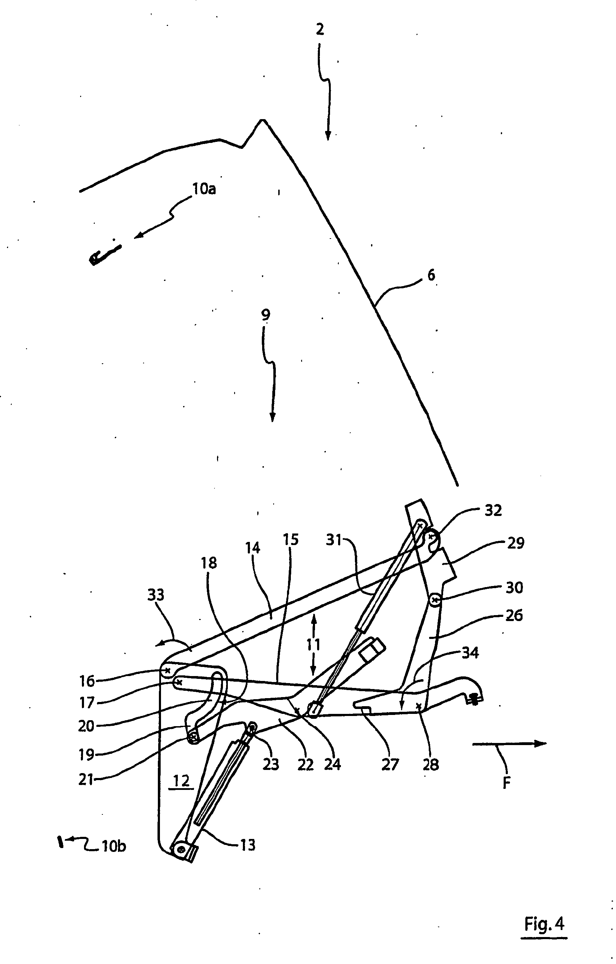

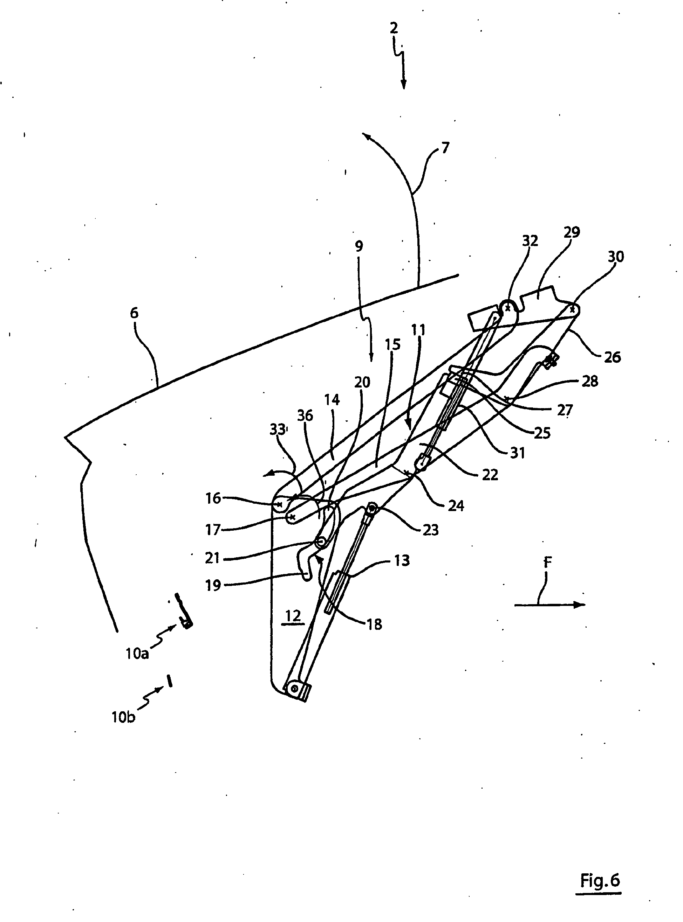

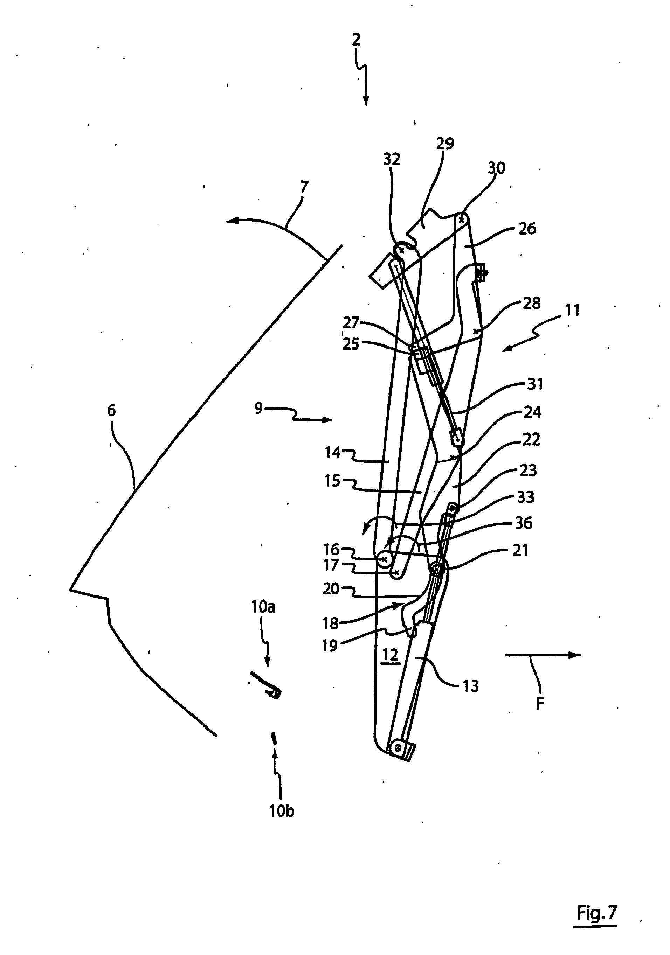

Um eine Freigabe einer Durchtrittsöffnung für das Dach 3 zu ermöglichen, kann das Deckelteil 6 in einem in Richtung des Pfeils 7 öffnenden Bewegungssinn (Fig. 6,7) aufgeschwenkt und zum Schließen gegen den Pfeil 7 zurückgeschwenkt werden. Des weiteren kann das Deckelteil 6 in einem gegenläufigen Öffnungssinn zur Freigabe einer Beladeöffnung für Gepäck nach Art eines Kofferraumdeckels (Fig. 2 bis Fig. 4) in Richtung des Pfeils 8 geöffnet und gegen dessen Richtung geschlossen werden. Zur Ermöglichung dieser beiden Öffnungs- und Schließbewegungen ist das Deckelteil 6 pro Fahrzeuglängsseite jeweils an einer insgesamt mit 9 bezeichneten Bewegungsmechanik, die eine Gelenkkette 11 umfaßt, beweglich gehalten. In Fig. 1 ist das Deckelteil 6 zusätzlich an einem heckseitigen Schloß 10 gehalten, von dem es während jeder Öffnungsbewegung vollständig gelöst sein kann, was bei der Freigabe 7 der Durchtrittsöffnung für das Dach 3 nicht zwingend, jedoch, wie oben erläutert, vorteilhaft ist. Das Schloß 10 umfaßt ein mit dem Deckelteil 6 mitbewegbares Schloßteil 10a und ein an der Karosserie 5 gehaltenes Schloßteil 10b.

Die Bewegungsmechanik 9 umfaßt im Ausführungsbeispiel einen karosserieseitigen Lagerbock 12, an dem ein Antriebsorgan 13 sowie zwei Lenker 14, 15 über Gelenke 16, 17 beweglich gehalten sind. Der gesamte Heckdeckel 6 kann daher mitsamt seiner Bewegungsmechanik 9 modular in die Karosserie 5 eingesetzt werden. Eine gesonderte Halterung, des Antriebsorgans 13 ist ebenfalls denkbar. Der Lagerbock 12 umfaßt des weiteren eine ausgenommene Kulisse 18 mit einem ersten Kreisbogensegment 19, das einem großen Radius folgt und um die Schwenkachse 24 eines weiter unten erläuterten Schloßhebels 22 verläuft, und einem zweiten, um die Schwenkachse des Gelenks 17 laufenden Kreisbogensegment 20.

In der Kulisse 18 ist ein Zapfen oder Achsstummel 21 eines Schloßhebels 22 geführt, an dem mit Abstand zur Führung 21 an einer weiteren Lagerstelle 23 das Antriebsorgan 13 angreift. Der Schloßhebel 22 ist außerhalb der Führung 21 am Gelenk 24 drehbeweglich mit dem Lenker 15 verbunden. Des weiteren ist das der Führung 21 abgewandte Ende 25 des Schloßhebels 21 zum kraftschlüssigen Eingriff an einem Klinkenende 27 eines weiteren Lenkers 26 vorgesehen.

Der Schloßhebel 22 könnte statt von dem Antriebsorgan 13, von dem auch die Bewegung des Deckelteils 6 bewirkbar ist, durch einen eigenen Antrieb bewegbar sein, etwa einen elektrisch, pneumatisch oder hydraulisch arbeitenden. Auch ein Einsatz von etwa Piezo-Kristallen kommt in Betracht, um einzelne Gelenke zu blockieren.

Der Lenker 26 ist einerseits am Hebel 15 über das Gelenk 28 schwenkbeweglich gehalten und andererseits an einen deckelseitigen Lagerbock 29 über ein Gelenk 30 schwenkbeweglich angebunden.

Zwischen dem Hebel 15 und dem deckelseitigen Lagerbock 29 oder ggf. einem anderen geeigneten Lenker der Mechanik erstreckt sich des weiteren ein weiteres Antriebs- oder antriebsunterstützendes Organ 31, hier als Gasdruckzylinder ausgebildet. Dieses erleichtert die Kofferraumöffnung.

Dem deckelseitigen Lagerbock 29 ist noch ein weiteres Schwenkgelenk 32 als Lagerstelle für den anderenends am Lagerbock 12 der Karosserie 5 gehaltenen Lenker 14 zugeordnet. Dieser erstreckt sich somit direkt zwischen Karosserie 5 und Deckelteil 6, wohingegen der andere am Lagerbock 12 abgestützte Lenker 15 sich zwischen Karosserie 5 und Zwischengelenk 28 und der daran anschließende Hebel 26 sich zwischen diesem Zwischengelenk 28 und dem Deckelteil 6 erstreckt.

Um das Deckelteil 6 aus der geschlossenen Stellung (Fig. 1) im ersten Bewegungssinn in Richtung des Pfeils 8 zur Freigabe der Beladeöffnung für Gepäck zu öffnen (Fig. 2 bis Fig. 4) oder anschließend gegen Richtung des Pfeils 8 zu schließen, bleibt das Antriebsorgan 13 unbewegt in eingefahrener Stellung. Dadurch wird auch zwangsweise der Schloßhebel 22 unbewegt gehalten. Dessen Lagerzapfen 21 ist dann dann im Abschnitt 19 der Kulisse 18 zwangsweise unbewegt und kann sich nicht auswärts bewegen. Somit ist der Hebel 15 durch die Ankoppelung des Schloßhebels 22 im Gelenk 24 an diesen ebenfalls an einer Schwenkbewegung gehindert. Dessen karosserieseitiges Gelenk 17 ist dadurch für diesen Bewegungssinn blockiert. Von den fünf Gelenken 16, 17, 28, 30, 32 der Mehrgelenkanordnung 11 mit den Lenkern 14, 15, 26 sowie dem karosserieseitigen Lagerbock 12 und dem deckelteilseitigen Lagerbock 29 bleiben somit lediglich die vier Gelenke 16, 28, 30, 32 beweglich.

Die Öffnung kann vom Organ 31 angetrieben oder bei manueller Öffnung von diesem unterstützt verlaufen. Bei Öffnung des Deckelteils 6 in Richtung des Pfeils 8 schwenken aufgrund der Blockierung des Gelenks 17 nur der Lenker 14 um das Gelenk 16 in Richtung des Pfeils 33 und der Lenker 26 um das Gelenk 28 in Richtung des Pfeils 34. Dabei nehmen sie den fest am Deckelteil 6 angebundenen Lagerbock 29 über die Gelenke 32, 30 nach bekannter Kinematik eines Viergelenks mit. '

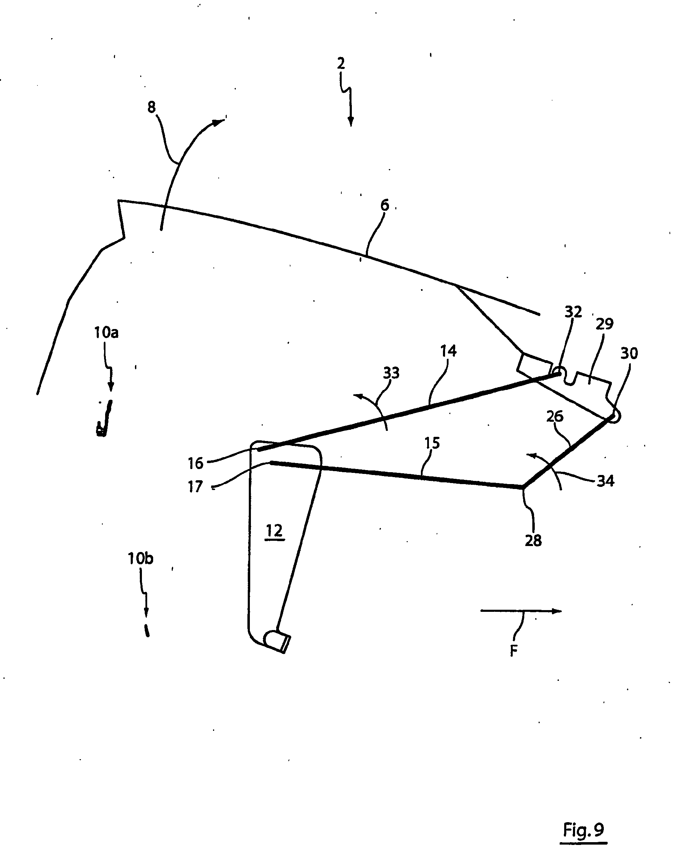

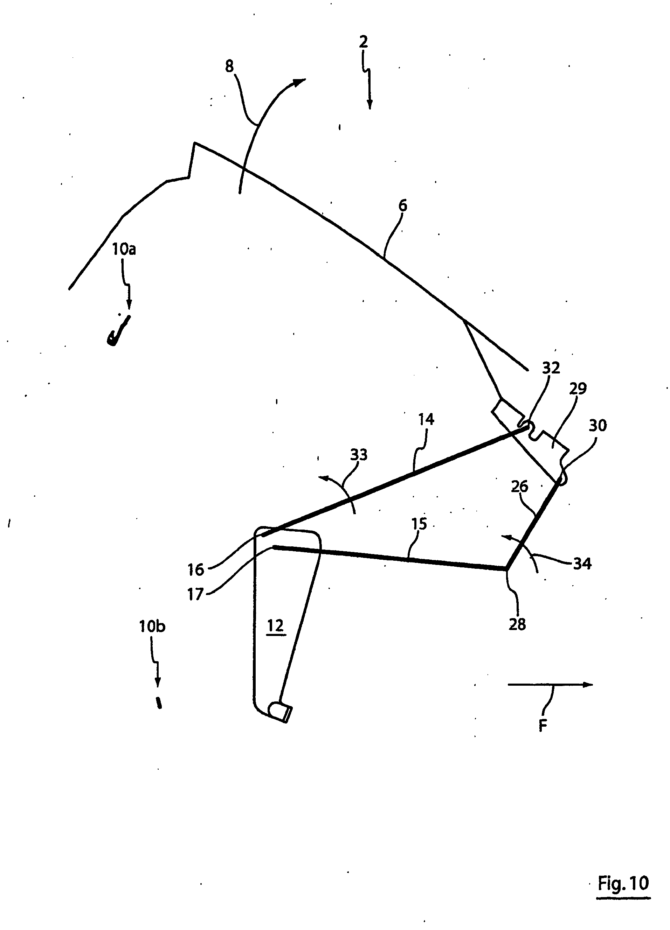

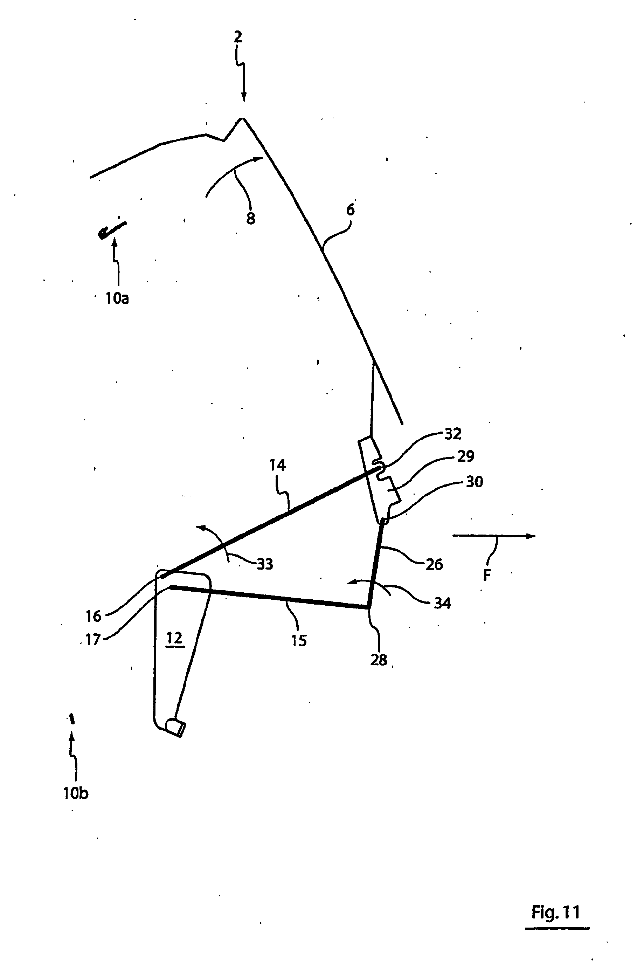

In den Figuren 9 bis 11 ist die Kinematik der Bewegungsmechanik 9 noch einmal ähnlich den Figuren 2 bis 4, jedoch schematisiert und ohne die Antriebe 13, 31 sowie ohne den Schloßhebel 22 und seine Funktion dargestellt. Es wird deutlich, daß für den beschriebenen Bewegungssinn nicht alle fünf Gelenke 16, 17, 28, 30, 32, sondern aufgrund der Blockierung des Gelenks 17 lediglich das Viergelenk 16, 28, 30, 32 aktiv ist.

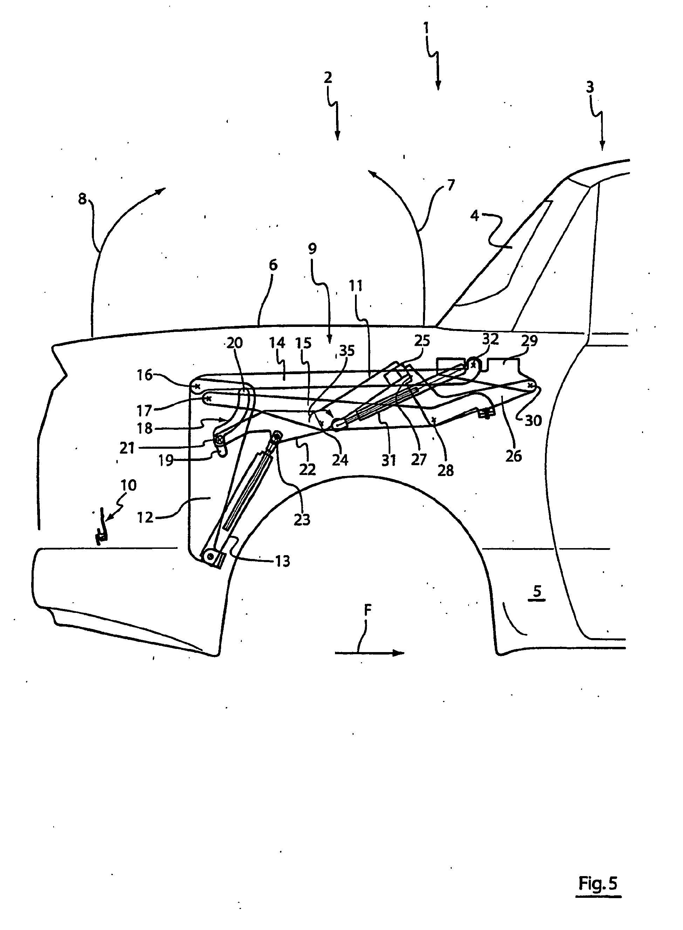

Um das Deckelteil 6 hingegen aus der geschlossenen Stellung (Fig. 1) im zweiten Bewegungssinn in Richtung des Pfeils 7 zur Freigabe der Durchtrittsöffnung für das Dach zu öffnen (Fig. 5 bis Fig. 7), fährt zunächst das Antriebsorgan 13 so weit aus (Fig. 5), bis der Zapfen 21 des Schloßhebels 22, der von dem Antrieb 13 über die Verbindung 23 mitbewegt wird, in das zweite Kreisbogensegment 20 der Kulisse 18 eintritt. Dadurch kann bei weiterem Ausschieben des Kolbens des Antriebsorgans 13 der Lagerzapfen 21 in der Kulisse 19 um die Achse des Gelenks 17 umlaufen. Somit ist der Hebel 15 durch die Ankoppelung des Schloßhebels 22 im Gelenk 24 an diesen verschwenkbar. Dessen karosserieseitiges Gelenk 17 ist dadurch für diesen Bewegungssinn - anders als oben - freigegeben.

Wie in der ersten Bewegungsphase sichtbar ist, in der der Zapfen 21 noch im ersten, nur wenig gekrümmten Teil 19 der Kulisse 18 durch Ausschub des Antriebsorgans 13 aufwärts läuft (Übergang von Fig 1 zu Fig. 5), ist zunächst noch die Schwenkbewegung des Lenkers 15 blockiert. Dies hat zur Folge, daß der Schloßhebel 22 in dieser Phase um das Gelenk 24 in Richtung des Pfeils 35 ein Stück weit abwärts verschwenkt und mit seinem Kopf 25 in Anlage an einen ausgenommenen Bereich 27 des Lenkers 26 gelangt. Dadurch wird dessen Verschwenken in Richtung des Pfeils 34 um das Zwischengelenk 28 blockiert. Diese Blockierung bleibt während der gesamten Bewegung in diesem Öffnungssinn erhalten. Von den fünf Gelenken 16, 17, 28, 30, 32 der Mehrgelenkanordnung 11 bleiben somit in diesem Bewegungssinn lediglich die vier Gelenke 16, 17, 30, 32 beweglich. Das Öffnen oder Schließen kann vom Organ 13 üblicherweise vollständig bewirkt werden. Bei Öffnung des Deckelteils 6 in Richtung des Pfeils 7 schwenken aufgrund der Blockierung des Gelenks 28 nur der Lenker 14 um das Gelenk 16 in Richtung des Pfeils 33 und der Lenker 15 um das Gelenk 17 in Richtung des Pfeils 36. Dabei nehmen sie den fest am Deckelteil 6 angebundenen Lagerbock 29 über das Gelenk 32 sowie den jetzt starr mit dem Lenker 15 verbundenen Lenker 26 und dessen Gelenk 30 nach wiederum bekannter Kinematik eines Viergelenks mit.

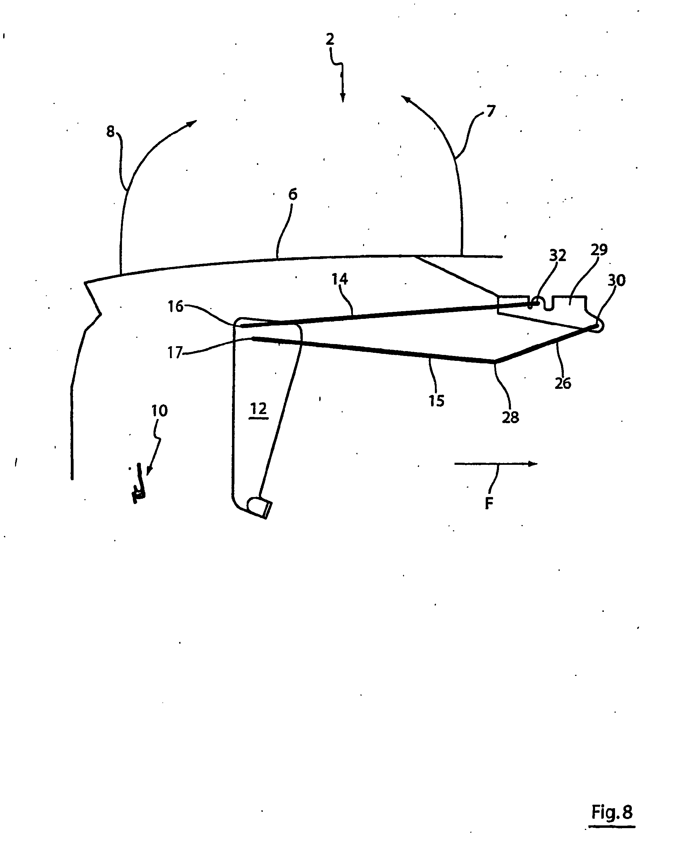

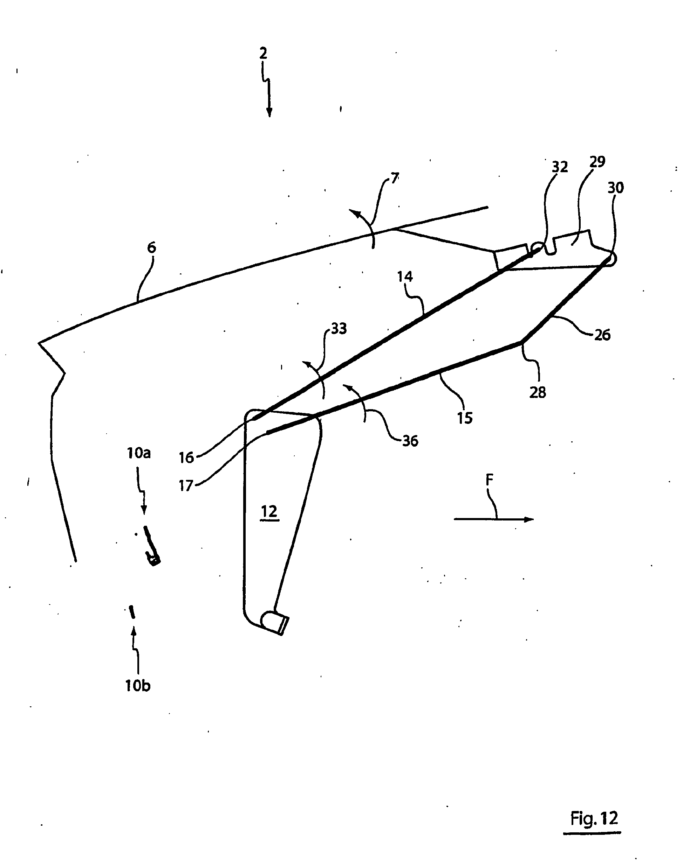

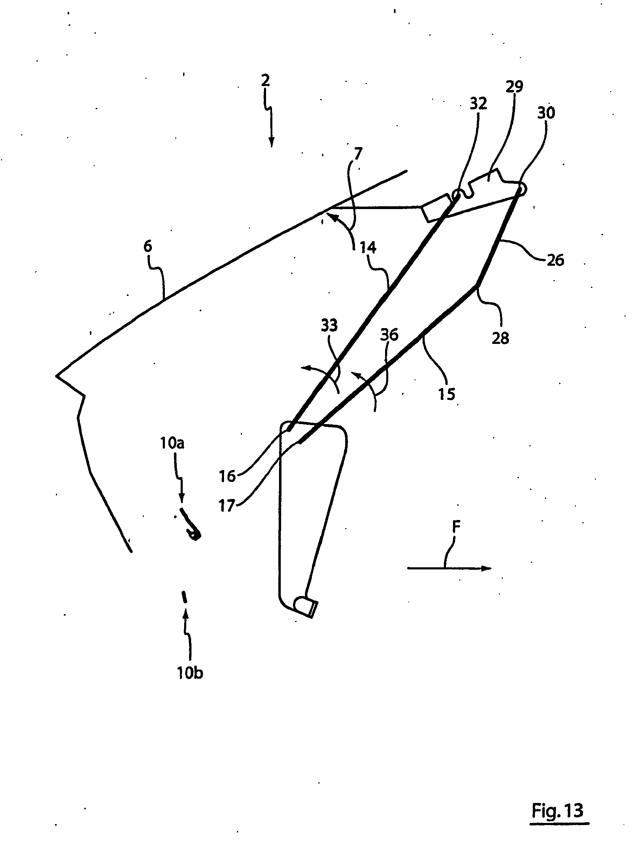

In den Figuren 12 bis 13 ist die Kinematik der Bewegungsmechanik 9 noch einmal ähnlich den Figuren 6 und 7, jedoch schematisiert und ohne die Antriebe 13, 31 sowie ohne den Schloßhebel 22 und seine Funktion dargestellt. Es wird deutlich, daß auch für den hier beschriebenen Bewegungssinn aus der Schließstellung nach Fig. 8 nicht alle fünf Gelenke 16, 17, 28, 30, 32, sondern aufgrund der Blockierung des Gelenks 28 lediglich das Viergelenk 16, 17, 30, 32 aktiv ist. Die Lenker 15 und 26 wirken daher bei dieser Deckelteilbewegung wie ein gemeinsamer Lenker.

Auch in diesem Bewegungssinn ist wiederum wie oben das Fünfgelenk 16, 17, 28, 30, 32 auf ein Viergelenk reduziert, wobei anstelle der Sperrung des Gelenks 17 im oben beschriebenen Öffnungs- und Schließsinn hier das Gelenk 28 gesperrt ist.

Es wäre anstelle der Reduktion eines Fünfgelenks zu einem Viergelenk auch möglich, beispielsweise etwa ein Achtgelenk zu einem jeweils aktiven Siebengelenk zu blockieren oder auch mehrere Gelenke zu sperren und somit beispielsweise ein Sechsgelenk für einen jeweiligen Bewegungssinn auf ein Viergelenk zu reduzieren und für die gegensinnige Verlagerung des Deckelteils 6 zumindest ein anderes Gelenk zu sperren.

Wie in der beginnenden Öffnung oder der Endphase des Schließens nach Fig. 5 gegenüber der unbelasteten und dauerhaften Schließstellung nach Fig. 1 deutlich wird, eröffnet die erfindungsgemäße Ausgestaltung zudem die Möglichkeit, daß die Mehrgelenkkette 11 beim Schließen des Deckelteils 6 während des Einfahrens des Antriebsorgans 13 in eine abwärts druckbelastete Anpreßstellung verlagerbar ist. Dadurch kann ein besonders zuverlässiges Schließen des Schlosses 10 erreicht werden, so daß dieses auch bei Bewegung 7 im Freigabesinn der Durchtrittsöffnung für das Dach unproblematisch vollständig aus dem Schloß 10 herausgehoben werden kann und nicht die Schloßachse als Schwenkachse benötigt. In der Stellung nach Figur 5, die sowohl beim Öffnen als auch beim Schließen des Deckelteils 6 durchlaufen wird, ist der Schloßhebel 22 um das Gelenk 24 in Richtung des Pfeils 35 ein Stück weit abwärts verschwenkt und mit seinem Kopf 25 in Anlage an einen ausgenommenen Bereich 27 des Lenkers 26 gelangt. Durch ein Übermaß des Kopfes 25 ist gleichzeitig der Lenker 26 um das Gelenk 28 in Richtung des Pfeils 37 ein Stück weit abwärts gedrückt und zieht dabei das Deckelteil 6 mit nach unten, wodurch dieses in das Schloß 10 gedrückt wird, was beim Schließen die oben beschriebenen Zuverlässigkeitsvorteile bewirkt.

## Patentansprüche

1. Cabriolet-Fahrzeug (1) mit einem in einem rückwärtigen Fahrzeugbereich (2) unterhalb eines Deckelteils (6) ablegbaren Dach (3), wobei das Deckelteil (6) wahlweise zur Freigabe (8) einer Beladeöffnung für Gepäck oder zur Freigabe (7) einer Durchtrittsöffnung für das Dach (3) geöffnet werden kann und hierfür über zumindest eine Bewegungsmechanik (9) im Fahrzeug (1) gehalten ist, wobei die Bewegungsmechanik (9) zumindest einen Mehrgelenkmechanismus (11) mit jeweils einer Überzahl von Gelenken (16;17;28;30;32) für jeden einzelnen der genannten Bewegungssinne des Deckelteils (6) umfaßt, wobei sowohl für die Bewegung des Deckelteils (6) im Freigabesinn (8) der Beladeöffnung für Gepäck als auch für die Bewegung im Freigabesinn (7) der Durchtrittsöffnung für das Dach (3) jeweils teilweise dieselben Gelenke (16;30;32) bewegbar sind und bei jeder der genannten Bewegungen zumindest ein Gelenk (17;28) blockiert ist,
**dadurch gekennzeichnet,**
**daß** die Bewegungsmechanik (9) pro Fahrzeugseite einen Mehrgelenkmechanismus (11) mit n Gelenken (16;17;28;30;32) bildet, wobei zur Bewegung des Deckelteils im Freigabesinn (8) der Beladeöffnung für Gepäck ein Gelenk blockiert (17) und n-1 Gelenke (16;28;30;32) gegeneinander beweglich sind und zur Bewegung des Deckelteils (6) im Freigabesinn (7) der Durchtrittsöffnung für das Dach (3) ein anderes Gelenk (28) blockiert und wiederum n-1 Gelenke (16;17;30;32) beweglich sind.

2. Cabriolet-Fahrzeug nach Anspruch 1,
**dadurch gekennzeichnet,**
**daß** das Deckelteil (6) in jedwedem Bewegungssinn nur über den Mehrgelenkmechanismus (11) an der Karosserie (5) gehalten ist.

3. Cabriolet-Fahrzeug nach einem der Ansprüche 1 oder 2,
**dadurch gekennzeichnet,**
**daß** der Mehrgelenkmechanismus (11) ein Fünfgelenk (16;17;28;30;32) bildet und in jedem Öffnungssinn (7;8) des Deckelteils (6) ein Viergelenk (16;17;30;32 bzw. 16;28;30;32) aktiv ist.

4. Cabriolet-Fahrzeug nach einem der Ansprüche 1 bis 3,
**dadurch gekennzeichnet,**
**daß** insgesamt drei Lenker (14;15;26) vorgesehen sind, von denen sich ein erster (14) zwischen einer karosserieseitigen (16) und einer deckelteilseitigen Lagerung (32), ein zweiter (15) zwischen einer karosserieseitigen Lagerung (17) und einem Zwischengelenk (28) und ein dritter (26) zwischen dem Zwischengelenk (28) und einer deckelteilseitigen Lagerung (30) erstreckt.

5. Cabriolet-Fahrzeug nach Anspruch 4,
**dadurch gekennzeichnet,**
**daß** zur Bewegung des Deckelteils (6) im Freigabesinn (8) der Beladeöffnung für Gepäck die Bewegung des zweiten Lenkers (15) um seine karosserieseitige Lagerstelle (17) blockiert ist.

6. Cabriolet-Fahrzeug nach einem der Ansprüche 4 oder 5,
**dadurch gekennzeichnet,**
**daß** zur Bewegung des Deckelteils (6) im Freigabesinn (7) der Durchtrittsöffnung für das Dach (3) die Bewegung des Zwischengelenks (28) blockiert ist.

7. Cabriolet-Fahrzeug nach einem der Ansprüche 1 bis 6,
**dadurch gekennzeichnet,**
**daß** für die unterschiedlichen Gelenkblockierungen (17;28) zumindest ein mechanisch blockierender Schloßhebel (22) vorgesehen ist.

8. Cabriolet-Fahrzeug nach Anspruch 7,
**dadurch gekennzeichnet,**
**daß** für die Blockierung unterschiedlicher Gelenke (17;28) genau ein Schloßhebel (22) vorgesehen ist, der je nach seiner Stellung unterschiedliche Gelenke (17;28) blockiert.

9. Cabriolet-Fahrzeug nach einem der Ansprüche 7 oder 8,
**dadurch gekennzeichnet,**
**daß** der Schloßhebel (22) von einem Antriebsorgan (13) beweglich ist.

10. Cabriolet-Fahrzeug nach einem der Ansprüche 1 bis 9,
**dadurch gekennzeichnet,**
**daß** der Mehrgelenkmechanismus (11) beim Schließen des Deckelteils (6) in eine gegenüber einer unbelasteten geschlossenen Stellung abwärts druckbelastete Anpreßstellung verlagerbar ist.

## Claims

1. A convertible vehicle (1) comprising a roof (3) which can be stowed in a rear vehicle section (2), under a cover part (6), which cover part (6) can be selectively opened for exposure (8) of a luggage loading opening or for exposure (7) of a passage opening for the roof (3) and which is retained for this purpose by at least one displacement mechanism (9) in the vehicle (1), said displacement mechanism (9) comprising at least one multiple-joint mechanism (11) with a respective superior number of joints (16;17;28;30;32) for each of the directions of movement mentioned above for the cover part (6), wherein partly the same joints (16;30;32) can be respectively moved to effect both the movement of the cover part (6) in the direction of exposure (8) of the luggage loading opening and in the direction of exposure (7) of the passage opening for the roof (3) and wherein at least one joint (17;28) is blocked during any of the aforementioned movements,
**characterised in that**
said displacement mechanism (9) forms, on each vehicle side, a multiple-joint mechanism (11) comprising n joints (16;17;28;30;32) and, in order to move the cover part in the direction of exposure (8) of the luggage loading opening one joint (17) is blocked and n-1 joints (16;28;30;32) can be moved relative to one another, and, in order to move the cover part (6) in the direction of exposure (7) of the passage opening for the roof (3), another joint (28) is blocked and again n-1 joints (16;17;30;32) can be moved.

2. The convertible vehicle according to claim 1, **characterised in that** the cover part (6) is retained on the vehicle body (5) in each direction of movement only by the multiple-joint mechanism (11).

3. The convertible vehicle according to any one of claims 1 or 2, **characterised in that** the multiple-joint mechanism (11) forms a five-part joint (16;17;28;30;32) and **in that** a respective four-part joint (16;17;30;32 or 16;28;30;32) is active in each opening direction (7;8) of the cover part (6).

4. The convertible vehicle according to any one of claims 1 to 3, **characterised in that** a total of three links (14;15;26) are provided, a first (14) of which extends between a support (16) on the side of the vehicle body and a support (32) on the side of the cover part, a second (15) of which extends between a support (17) on the side of the vehicle body and an intermediate joint (28), and a third (26) of which extends between the intermediate joint (28) and a support (30) on the side of the cover part.

5. The convertible vehicle according to claim 4, **characterised in that**, in order to move the cover part (6) in the direction of exposure (8) of the luggage loading opening, the movement of the second link (15) about its support (17) on the side of the vehicle body is blocked.

6. The convertible vehicle according to any one of claims 4 or 5, **characterised in that**, in order to move the cover part (6) in the direction of exposure (7) of the passage opening for the roof (3), the movement of the intermediate joint (28) is blocked

7. The convertible vehicle according to any one of claims 1 to 6, **characterised in that** at least one locking lever (22) for mechanical blocking is provided for blocking the different joints (17;28).

8. The convertible vehicle according to claim 7, **characterised in that** exactly one lock lever (22) is provided for blocking different joints (17;28), which blocks different joints (17;28) according to its position.

9. The convertible vehicle according to any one of claims 7 or 8, **characterised in that** the lock lever (22) is movable by a driving element (13).

10. The convertible vehicle according to any one of claims 1 to 9, **characterised in that**, in order to close the cover part (6), the multiple-joint mechanism (11) can be shifted towards a pressure contact position in which a downward pressure is applied as compared to an unloaded, closed position.

## Revendications

1. Véhicule cabriolet (1) avec un toit (3) que l'on peut ranger à l'arrière (2) du véhicule, au-dessous d'un couvercle (6), ledit couvercle (6) pouvant être ouvert sélectivement ou bien pour la libération (8) d'une ouverture de chargement de bagages ou bien pour la libération (7) d'une ouverture de passage pour ledit toit (3) et étant tenu dans ce but par au moins un mécanisme de déplacement (9) dans le véhicule (1), ledit mécanisme de déplacement (9) comprenant au moins un mécanisme à articulations multiples (11) avec un surnombre respectif d'articulations (16;17;28;30;32) pour chacun des sens de déplacement évoqués pour le couvercle (6), ce qui permet de déplacer en partie les mêmes articulations (16;30;32) dans chaque cas pour effectuer le déplacement du couvercle (6) dans le sens de libération (8) de l'ouverture de chargement de bagages ainsi que dans le sens de libération (7) de l'ouverture de passage pour le toit (3) tout en bloquant au moins une articulation (17;28) pendant chacun des déplacements évoqués,
**caractérisé en ce que**
le mécanisme de déplacement (9) constitue de chaque côté du véhicule un mécanisme à articulations multiples (11) avec n articulations (16;17;28;30;32), dont une (17) est bloquée tout en permettant le déplacement de n-1 articulations (16;28;30;32), les unes par rapport aux autres, afin de déplacer le couvercle dans le sens de libération (8) de l'ouverture de chargement de bagages, et dont une autre (28) est bloquée tout en permettant également le déplacement de n-1 articulations (16;17;30;32) afin déplacer le couvercle (6) dans le sens de libération (7) de l'ouverture de passage pour le toit (3).

2. Véhicule cabriolet selon la revendication 1, **caractérisé en ce que** le couvercle (6) n'est tenu sur la carrosserie (5), dans chaque sens de déplacement, que par le mécanisme à articulations multiples (11).

3. Véhicule cabriolet selon l'une quelconque des revendications 1 ou 2, **caractérisé en ce que** le mécanisme à articulations multiples (11) constitue un ensemble à cinq articulations (16;17;28;30;32) et **en ce qu'**un ensemble respectif à quatre articulations (16;17;30;32 ou 16;28;30;32 respectivement) est actif dans chaque sens d'ouverture (7;8) du couvercle (6).

4. Véhicule cabriolet selon l'une quelconque des revendications 1 à 3, **caractérisé en ce que** l'on prévoit en tout trois bras (14;15;26), dont un premier (14) s'étend entre un support (16) du côté de la carrosserie et un support (32) du côté du couvercle, un deuxième (15) s'étend entre un support (17) du côté de la carrosserie et une articulation intermédiaire (28), et un troisième (26) s'étend entre ladite articulation intermédiaire (28) et un support (30) du côté du couvercle.

5. Véhicule cabriolet selon la revendication 4, **caractérisé en ce que** le déplacement du deuxième bras (15) autour de son support (17) du côté de la carrosserie est bloqué afin de déplacer le couvercle (6) dans le sens de libération (8) de l'ouverture de chargement de bagages.

6. Véhicule cabriolet selon l'une quelconque des revendications 4 ou 5, **caractérisé en ce que** le déplacement de l'articulation intermédiaire (28) est bloqué afin de déplacer le couvercle (6) dans le sens de libération (7) de l'ouverture de passage pour le toit (3).

7. Véhicule cabriolet selon l'une quelconque des revendications 1 à 6, **caractérisé en ce que** l'on prévoit au moins un levier de verrouillage (22) mécanique pour effectuer les blocages des différentes articulations (17;28).

8. Véhicule cabriolet selon la revendication 7, **caractérisé en ce que** l'on prévoit exactement un levier de verrouillage (22) pour bloquer les différentes articulations (17;28), qui bloque différentes articulations (17;28) selon sa position.

9. Véhicule cabriolet selon l'une quelconque des revendications 7 ou 8, **caractérisé en ce que** le levier de verrouillage (22) est déplaçable par un élément d'entraînement (13).

10. Véhicule cabriolet selon l'une quelconque des revendications 1 à 9, **caractérisé en ce que** l'on peut déplacer le mécanisme à articulations multiples (11), lors de la fermeture du couvercle (6), vers une position de contact soumise à une pression vers le bas par rapport à une position de fermeture non chargée.
